# EUROPEAN PATENT APPLICATION

(11) **EP 2 471 760 A1**
(43) Date of publication of application: **04.07.2012**
(21) Application number: 10811833.2
(22) Date of filing: 24.08.2010
(51) Int. Cl.: C03C 27/12, C09K 3/00

(54) **INTERMEDIATE FILM FOR LAMINATED GLASS, AND LAMINATED GLASS**

(30) Priority: 24.08.2009 JP 2009193478
(71) Applicant: Sekisui Chemical Co., Ltd., Osaka 530-8565 (JP)
(72) Inventor: HATTA Bungo, Koka-shi Shiga 528-8585 (JP)
(74) Representative: Hart-Davis, Jason
(86) International application number: PCT/JP2010/064236
(87) International publication number: WO 2011/024783

(57) **Abstract**

The present invention is aimed to provide an interlayer film for a laminated glass containing a thermoplastic elastomer and preventing degradation of interior materials of buildings, art works, constituent materials of a laminated glass other than the interlayer film for a laminated glass, and the like, while maintaining high transparency.

The present invention is an interlayer film for a laminated glass comprising:
a thermoplastic elastomer; and
any of a compound represented by a formula (1), a compound represented by a formula (2), and a mixture of the compound represented by the formula (1) and the compound represented by the formula (2): 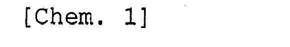 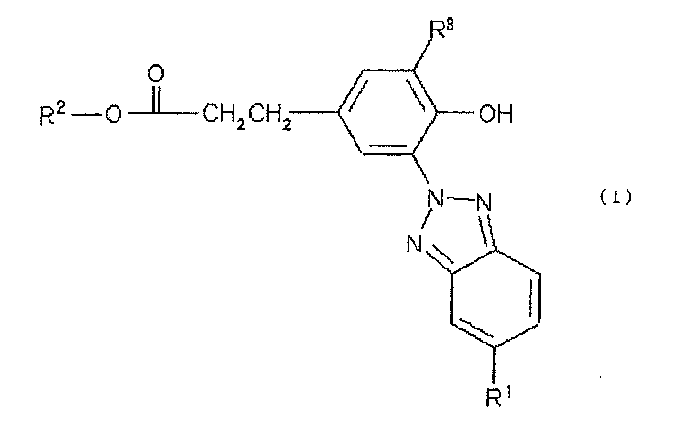 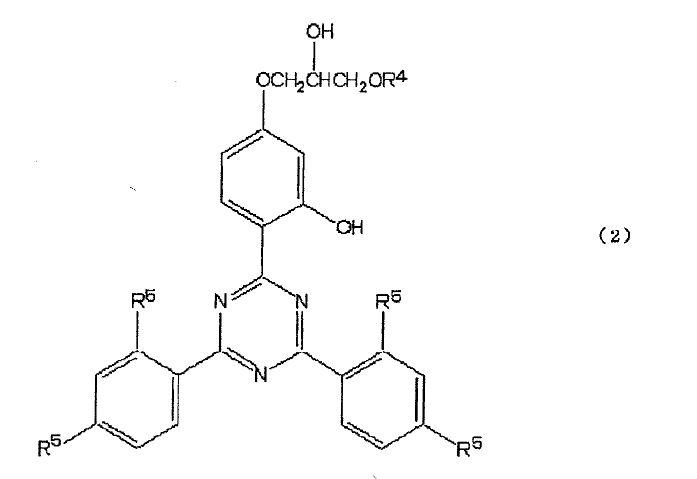 wherein, R¹ represents hydrogen or chlorine, R² represents an alkyl group having a straight-chain or branched structure containing 3 to 10 carbon atoms, and R³ represents an alkyl group containing 3 to 10 carbon atoms, in the formula (1) and
R⁴ represents an alkyl group containing 1 to 5 carbon atoms and R⁵ represents a hydrogen atom or an alkyl group containing 1 to 3 carbon atoms, in the formula (2).

## Description

### TECHNICAL FIELD

The present invention relates to an interlayer film for a laminated glass containing a thermoplastic elastomer and preventing degradation of interior materials of buildings, art works, constituent materials of a laminated glass other than the interlayer film for a laminated glass, and the like, while maintaining high transparency. Moreover, the present invention relates to an interlayer film for a laminated glass containing a thermoplastic elastomer that contains no plasticizer and preventing degradation of interior materials of buildings, art works, constituent materials of a laminated glass other than the interlayer film for a laminated glass, and the like, while maintaining high transparency.

### BACKGROUND ART

A laminated glass is a safety glass because few glass fragments are scattered even if it is broken by impact from the outside. Therefore, laminated glasses have been used widely for windowpanes of buildings, and the like. One example of such a laminated glass is a laminated glass produced by interposing an interlayer film for a laminated glass which contains a thermoplastic resin between a pair of glass plates, and integrating the stack to be formed into a laminate.

In addition to polyvinylacetal plasticized by a plasticizer, various thermoplastic elastomers containing no plasticizer may be used as the thermoplastic resin in accordance with applications. For example, an interlayer film for a laminated glass which contains a thermoplastic elastomer, such as an ethylene-vinyl acetate copolymer, an ethylene-acrylic copolymer, and polyurethane, shows higher moisture resistance compared to an interlayer film for a laminated glass which contains plasticized polyvinylacetal. Recently, a laminated glass comprising lightweight plastic plates instead of heavy inorganic glass plates has been developed. When an interlayer film for a laminated glass containing plasticized polyvinylacetal is used in such a laminated glass, problems such as discoloration and lowered transparency of the plastic plate may have been caused due to an influence by the plasticizer. Such problems can be solved by an interlayer film for a laminated glass containing a thermoplastic elastomer, such as an ethylene-vinyl acetate copolymer, an ethylene-acrylic copolymer, and polyurethane (see Patent Documents 1 to 3), which is easily moldable without using a plasticizer.

When a laminated glass is used for windowpanes of buildings and the like, the laminated glass is subjected to ultraviolet irradiation. Conventional interlayer films for a laminated glass contain ultraviolet absorbers for the purpose of blocking ultraviolet rays.
Here, there has been a problem that addition of an ultraviolet absorber to an interlayer film for a laminated glass containing a thermoplastic elastomer, such as an ethylene-vinyl acetate copolymer, an ethylene-acrylic copolymer, and polyurethane, increases the haze value of an obtainable laminated glass.

### PRIOR ART DOCUMENTS

### PATENT DOCUMENTS

Patent Document 1: Japanese Kokai Publication No. 2008-119927 (JP-A 2008-119927)
Patent Document 2: Japanese Kokai Publication No. Hei-05-270870 (JP-A H05-270870)
Patent Document 3: WO07/029541

### SUMMARY OF INVENTION

### PROBLEMS TO BE SOLVED BY THE INVENTION

The present invention is aimed to provide an interlayer film for a laminated glass containing a thermoplastic elastomer and preventing degradation of interior materials of buildings, art works, constituent materials of a laminated glass other than the interlayer film for a laminated glass, and the like, while maintaining high transparency. Moreover, the present invention is aimed to provide an interlayer film for a laminated glass containing a thermoplastic elastomer that contains no plasticizer and preventing degradation of interior materials of buildings, art works, constituent materials of a laminated glass other than the interlayer film for a laminated glass, and the like, while maintaining high transparency.

### MEANS FOR SOLVING THE PROBLEMS

The present invention provides an interlayer film for a laminated glass comprising: a thermoplastic elastomer; and any of a compound represented by a formula (1), a compound represented by a formula (2), and a mixture of the compound represented by the formula (1) and the compound represented by the formula (2):

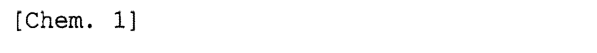

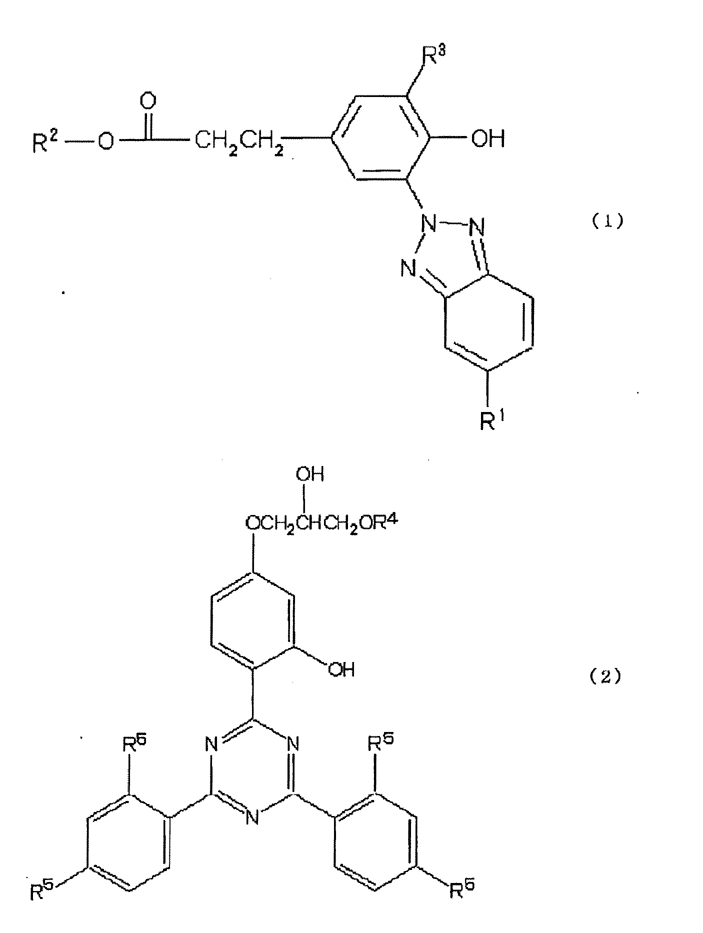

wherein, R¹ represents hydrogen or chlorine, R² represents an alkyl group having a straight-chain or branched structure containing 3 to 10 carbon atoms, and R³ represents an alkyl group containing 3 to 10 carbon atoms, in the formula (1) and
R⁴ represents an alkyl group containing 1 to 5 carbon atoms and R⁵ represents a hydrogen atom or an alkyl group containing 1 to 3 carbon atoms, in the formula (2).
The invention is described in detail below.

The present inventors have considered a variety of ultraviolet absorbers to find out that the following fact and completed the present invention. Namely, any of the compound represented by the formula (1), the compound represented by the formula (2), and the mixture of the compound represented by the formula (1) and the compound represented by the formula (2) enables production of an interlayer film for a laminated glass which prevents increase in the haze value even when a thermoplastic elastomer such as an ethylene-vinyl acetate copolymer, an ethylene-acrylic copolymer, and polyurethane is used and also prevents degradation of interior materials of buildings, art works, constituent materials of a laminated glass other than the interlayer film for a laminated glass, and the like, while maintaining high transparency.
Here, there has been another problem that an interlayer film for a laminated glass which contains an ethylene-vinyl acetate copolymer may increase the haze value of an obtainable laminated glass due to a partial crystallization of the ethylene moiety of the ethylene-vinyl acetate copolymer. However, when an interlayer film for a laminated glass containing an ethylene-vinyl acetate copolymer (a vinyl acetate content of 29% by mass or more) contains the compound represented by the formula (1), the haze value of an obtainable laminated glass is decreased and the visible light transmittance is enhanced.

The interlayer film for a laminated glass of the present invention contains a thermoplastic elastomer and an ultraviolet absorber. The thermoplastic elastomer is not particularly limited, and preferable examples thereof include an ethylene-vinyl acetate copolymer, an ethylene-acrylic copolymer, polyurethane, and polyurethane containing sulfur. Such thermoplastic elastomers are easily moldable without plasticizers. In particular, the thermoplastic elastomer is preferably an ethylene-vinyl acetate copolymer.

The ethylene-vinyl acetate copolymer may be crosslinked or non-crosslinked type. Moreover, variants of the ethylene-vinyl acetate copolymer may also be used, such as an ethylene-vinyl acetate saponified copolymer and an ethylene-vinyl acetate hydrolyzed copolymer.

The lower limit of the vinyl acetate content of the ethylene-vinyl acetate copolymer is preferably 25% by mass and the upper limit thereof is preferably 40% by mass, measured based on JIS K-6730 "Testing Methods for Ethylene-Vinyl Acetate Resins". The vinyl acetate content of 25% by mass or more increases the visible light transmittance and lowers the haze value of an obtainable laminated glass.
The vinyl acetate content of 40% by mass or less enhances the breaking strength of an obtainable interlayer film for a laminated glass, leading to production of a laminated glass having excellent impact resistance. The lower limit of the vinyl acetate content is more preferably 27% by mass and the upper limit thereof is more preferably 38% by mass. Moreover, the lower limit of the vinyl acetate content is still more preferably 28% by mass and the upper limit thereof is still more preferably 35% by mass.
In particular, when the vinyl acetate content of the ethylene-vinyl acetate copolymer is 29% by mass or more, the haze value of an obtainable laminated glass is further lowered.

The ethylene-acrylic copolymer is preferably at least one selected from the group consisting of an ethylene-methylacrylate copolymer, an ethylene-ethylacrylate copolymer, and an ethylene-butylacrylate copolymer.

The ultraviolet absorber is a compound represented by the formula (1), a compound represented by the formula (2), or a mixture of the compound represented by the formula (1) and the compound represented by the formula (2). Each of these may be used alone, or two or more of these may be used in combination. Many compounds are known as ultraviolet absorbers. However, only in the case that any of the above compounds is used, increase in the haze value can be suppressed even when the ultraviolet absorber is used with a thermoplastic elastomer in combination.

In the formula (1), R¹ represents hydrogen or chlorine. In particular, R¹ preferably represents chlorine.
In the formula (1), the lower limit of the carbon number of R² is 3 and the upper limit thereof is 10. Further, the lower limit of the carbon number of R² is preferably 4 and the upper limit thereof is preferably 9. Moreover, the lower limit of the carbon number of R² is more preferably 6 and the upper limit thereof is more preferably 8. Here, R² may be an alkyl group having a straight-chain structure or an alkyl group having a branched structure. When the compound represented by the formula (1) is produced by a common method, the produced compound is a mixture of a compound containing an alkyl group having a straight-chain structure as R² and a compound containing an alkyl group having a branched structure as R².

In the formula (1), the lower limit of the carbon number of R³ is 3 and the upper limit thereof is 10. Further, the lower limit of the carbon number of R³ is preferably 4 and the upper limit thereof is preferably 8. Moreover, the upper limit of the carbon number of R³ is still more preferably 6. Here, R³ may be an alkyl group having a straight-chain structure or an alkyl group having a branched structure. Preferably, R³ is an alkyl group having a branched structure.

Particularly, the compound represented by the formula (1) is preferably a compound in which R¹ represents chlorine, R² represents an alkyl group having a straight-chain or branched structure containing 8 carbon atoms, and R³ represents an alkyl group having a branched structure containing 4 carbon atoms. Specific examples of the compound represented by the formula (1) include a compound represented by a formula (1-1), a compound represented by a formula (1-2), and a mixture of the compounds represented by the formulae (1-1) and (1-2). In particular, the compound represented by the formula (1) is preferably a mixture of the compounds represented by the formulae (1-1) and (1-2).

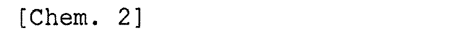

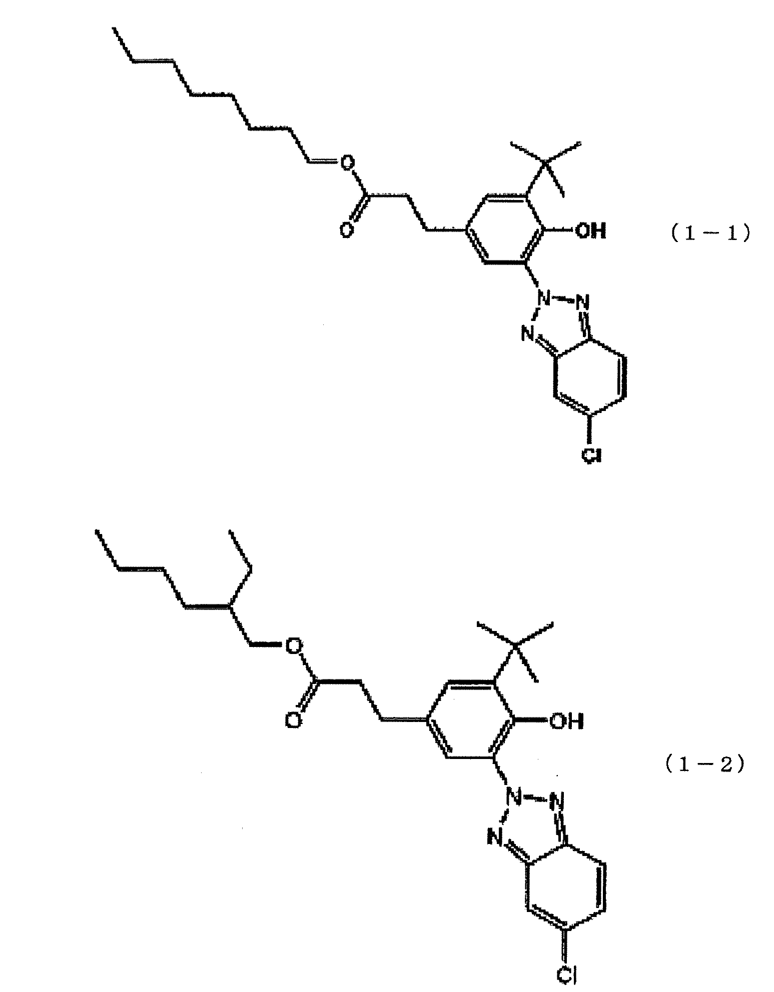

In the formula (2), the lower limit of the carbon number of R⁴ is 1 and the upper limit thereof is 5.
Further, the lower limit of the carbon number of R⁴ is preferably 2 and the upper limit is preferably 4. Moreover, the lower limit of the carbon number of R⁴ is more preferably 3.
In the formula (2), R⁵ represents a hydrogen atom or an alkyl group containing 1 to 3 carbon atoms. In particular, R⁵ preferably represents a methyl group or ethyl group, and more preferably represents a methyl group. In the formula (2), all the R⁵s may be the same as or different from each other.
In particular, the compound represented by the formula (2) is preferably a compound in which R⁴ represents an n-propyl group and R⁵ represents a methyl group.
Specific examples of the compound represented by the formula (2) include a compound represented by a formula (2-l):

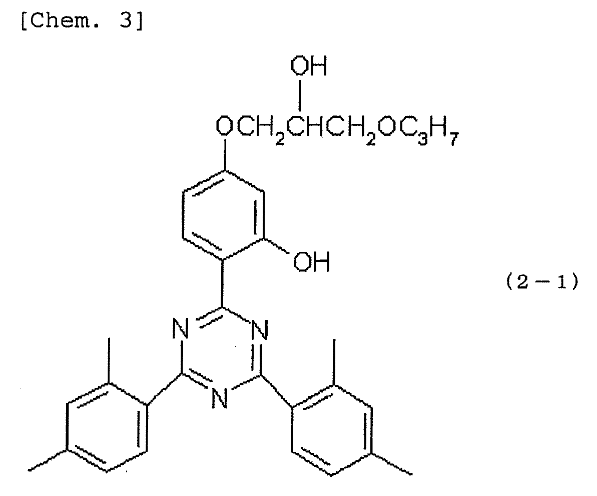

The lower limit of the amount of the compound represented by the formula (1), the compound represented by the formula (2) or a mixture of the compounds represented by the formulae (1) and (2) in the interlayer film for a laminated glass of the present invention is preferably 0.1% by weight and the upper limit thereof is preferably 5% by weight. When the amount of the compound represented by the formula (1), the compound represented by the formula (2) or a mixture of the compounds represented by the formulae (1) and (2) is 0.1% by weight or more, it is possible to sufficiently prevent degradation of interior materials of buildings, art works, constituent materials of a laminated glass other than the interlayer film for a laminated glass, and the like. When the amount is 5% by weight or less, it is possible to suppress coloring of an obtainable interlayer film for a laminated glass. The lower limit of the amount of the compound represented by the formula (1), the compound represented by the formula (2) or a mixture of the compounds represented by the formulae (1) and (2) is more preferably 0.3% by weight and still more preferably 0.5% by weight. The upper limit thereof is more preferably 3% by weight and still more preferably 2.4% by weight.

The interlayer film for a laminated glass of the present invention may contain an adhesiveness modifier such as a silane coupling agent.
The silane coupling agent is not particularly limited, and examples thereof include 3-(2-aminoethyl)-3-aminopropylmethyldimethoxysilane, 3-glycidoxypropyltrimethoxysilane, 2-(3,4-epoxycyclohexyl) ethyltrimethoxysilane, 3-methacryloxypropyltrimethoxysilane, 3-mercapropropyltrimethoxysilane, and vinyltrimethoxysilane. Each of these silane coupling agents may be used alone, or two or more of these may be used in combination.

With regard to the amount of the silane coupling agent, the lower limit is preferably 0.01 parts by weight and the upper limit is preferably 4 parts by weight, for each 100 parts by weight of the thermoplastic elastomer. When the amount of the silane coupling agent is less than 0.01 parts by weight, the silane coupling agent may fail to exert its effect sufficiently. In contrast, when the amount is more than 4 parts by weight, an obtainable interlayer film for a laminated glass may have lowered strength.

The interlayer film for a laminated glass of the present invention may contain a tackifier.
The tackifier is not particularly limited, and examples thereof include wood rosin, gum rosin, tall oil rosin, hydrogenated rosin, disproportionated rosin, disproportionated hydrogenated rosin, esterified rosin, metal chloride rosin, polymerized rosin, an aliphatic petroleum resin, an aromatic petroleum resin, an alicyclic petroleum resin, a copolymeric petroleum resin, a hydrogenated petroleum resin, and a pure monomer petroleum resin. Each of these tackifiers may be used alone, or two or more of these may be used in combination.

With regard to the amount of the tackifier, the lower limit is preferably 1 part by weight and the upper limit is preferably 40 parts by weight, for each 100 parts by weight of the thermoplastic elastomer. When the amount of the tackifier is less than 1 part by weight, the tackifier may fail to exert its effect sufficiently. In contrast, when the amount is more than 40 parts by weight, an obtainable interlayer film for a laminated glass may have lower transparency.

The interlayer film for a laminated glass of the present invention may contain a crystal nucleating agent for the purpose of enhancing the transparency.
The crystal nucleating agent is not particularly limited, and examples thereof include dibenzylidene sorbitol, dibenzylidene xylitol, dibenzylidene dulcitol, dibenzylidene mannitol, and calixarene. Each of these crystal nucleating agents may be used alone, or two or more of these may be used in combination.

With regard to the amount of the crystal nucleating agent, the lower limit is preferably 0.01 parts by weight and the upper limit is preferably 4 parts by weight, for each 100 parts by weight of the thermoplastic elastomer. When the amount of the crystal nucleating agent is less than 0.01 parts by weight, the crystal nucleating agent may fail to exert its effect sufficiently. In contrast, when the amount is more than 4 parts by weight, the crystal nucleating agent may be deposited in the interlayer film for a laminated glass.

The interlayer film for a laminated glass of the present invention may further contain conventionally known additives such as an antioxidant, a light stabilizer, a colorant, a dye, an infrared absorber, an anti-blocking agent, and an antistatic agent, as long as they do not impair the effect of the present invention.

A polar group may be incorporated to the surface of the interlayer film for a laminated glass of the present invention by corona treatment or plasma treatment, for the purpose of enhancing the adhesiveness of the interlayer film to an inorganic glass plate.

The interlayer film for a laminated glass of the present invention may be a single-layer film or a laminated film having two or more layers.
When the interlayer film for a laminated glass of the present invention is a laminated film, exemplary layers to be laminated on the layer containing the thermoplastic elastomer and any of the compound represented by the formula (1), the compound represented by the formula (2), and a mixture of the compound represented by the formula (1) and the compound represented by the formula (2) include: a primer layer for enhancing the adhesiveness of the film to a glass plate; an ultraviolet absorbing layer containing an ultraviolet absorber; a modified polyester film layer on which decoration is applied; an infrared (heat rays) reflective layer; a polyester film layer aimed to enhance the penetration resistance; and a colored polyester film layer.
Examples of the polyester film include a polyethylene terephthalate (PET) film and a polyethylene naphthalate (PEN) film.

With regard to the thickness of the interlayer film for a laminated glass of the present invention, the lower limit is preferably 0.1 mm and the upper limit is preferably 3 mm. When the thickness of the interlayer film for a laminated glass is less than 0.1 mm, an obtainable laminated glass may have lowered penetration resistance.
In contrast, when the thickness is more than 3 mm, an obtainable interlayer film for a laminated glass may have lowered transparency. The lower limit of the thickness of the interlayer film for a laminated glass of the present invention is more preferably 0.25 mm, and the upper limit thereof is more preferably 1.5 mm.

The method for producing the interlayer film for a laminated glass of the present invention is not particularly limited, and a conventionally-known method may be employed. An exemplary method includes the steps of: blending the thermoplastic elastomer, any of the compound represented by the formula (1), the compound represented by the formula (2), and a mixture of the compound represented by the formula (1) and the compound represented by the formula (2), and various additives in predetermined quantities; kneading the mixture uniformly; and forming a film by an extrusion method, calendar roll method, extrusion sheet casting method, inflation tube method, or the like.

The interlayer film for a laminated glass of the present invention contains any of the compound represented by the formula (1), the compound represented by the formula (2), and a mixture of the compound represented by the formula (1) and the compound represented by the formula (2), as an ultraviolet absorber. Because of this, the interlayer film for a laminated glass of the present invention is capable of preventing degradation of interior materials of buildings, art works, constituent materials of a laminated glass other than the interlayer film for a laminated glass, and the like, while maintaining high transparency, even when a thermoplastic elastomer is used therein. Especially, use of a thermoplastic elastomer containing no plasticizer allows the interlayer film for a laminated glass of the present invention to prevent degradation of interior materials of buildings, art works, constituent materials of a laminated glass other than the interlayer film for a laminated glass, and the like, while maintaining high transparency.

The present invention also provides a laminated glass comprising an interlayer film for a laminated glass of the present invention interposed between two transparent plates.
The transparent plate used in the laminated glass of the present invention is not particularly limited, and a commonly-used transparent glass plate may be used.
Examples thereof include inorganic glasses such as a float glass plate, a polished glass plate, a figured glass plate, a meshed glass plate, a wired glass plate, a colored glass plate, a heat absorbing glass plate, a heat reflecting glass plate, and a green glass. Moreover, an organic plastic plate is also usable.
Two or more of these may be used in combination as the transparent plates. Examples thereof include a laminated glass having an interlayer film for a laminated glass of the present invention interposed between an inorganic glass plate and an organic plastic plate.

The interlayer film for a laminated glass of the present invention contains the thermoplastic elastomer. Because of this, problems such as discoloration and lowered transparency of an organic plastic plate due to an influence by the plasticizer are prevented, even when the interlayer film is used in combination with an organic plastic plate. Thus, the interlayer film for a laminated glass of the present invention is particularly suitably used in a laminated glass including an organic plastic plate. Especially, when a thermoplastic elastomer that contains no plasticizer is used, the interlayer film for a laminated glass has excellent suppressing effect on discoloration and lowered transparency of an organic plastic plate.
Examples of the organic plastic plate include a polycarbonate plate and a polyacrylate plate.

The polycarbonate plate is excellent in transparency, impact resistance, and flame resistance.
When a polycarbonate plate is used as the transparent plate, a surface protective layer, such as a silicone hardcoat layer, may be provided on the surface of the polycarbonate plate for the purpose of enhancing abrasion resistance, excoriation resistance, chemical resistance, and light resistance.

The polyacrylate plate is excellent in transparency, light resistance, and physical mechanical properties. In particular, a polymethyl methacrylate plate is favorably used.
When the polyacrylate plate is used as the transparent plate, a surface protective layer, such as a silicone hardcoat layer, may be provided on the surface of the polyacrylate plate for the purpose of enhancing abrasion resistance, excoriation resistance, chemical resistance, and light resistance.

A method for producing the laminated glass of the present invention is not particularly limited, and a conventionally-known method may be employed.
Here, when a polycarbonate plate or polyacrylate plate is used as the transparent plate, the transparency and the appearance of an obtainable laminated glass may be impaired because they absorb moisture and the absorbed water may become bubbles upon heating. Accordingly, in production of the laminated glass, a polycarbonate plate or polyacrylate plate is preferably dried by heating in advance so that moisture therein is removed.

Applications of the laminated glass of the present invention are not particularly limited. For example, it may be used as a laminated glass for buildings.

### EFFECT OF THE INVENTION

According to the present invention, it is possible to provide an interlayer film for a laminated glass containing a thermoplastic elastomer and preventing degradation of interior materials of buildings, art works, constituent materials of a laminated glass other than the interlayer film for a laminated glass, and the like, while maintaining high transparency. Moreover, according to the present invention, it is possible to provide an interlayer film for a laminated glass containing a thermoplastic elastomer that contains no plasticizer and preventing degradation of interior materials of buildings, art works, constituent materials of a laminated glass other than the interlayer film for a laminated glass, and the like, while maintaining high transparency.

### MODES FOR CARRYING OUT THE INVENTION

Embodiments of the present invention are more specifically described in the following with reference to examples. However, the present invention is not limited to these examples.

### (Example 1)

### (1) Production of interlayer film for laminated glass

An ethylene-vinyl acetate copolymer resin (vinyl acetate content of 28% by mass), a mixture of the compounds represented by the formulae (1-1) and (1-2) (mixed at 30:70 in weight ratio), and N- (2-aminoethyl) -3-aminopropylmethyldimethoxysilane were mixed to prepare a resin composition in which the amount of the mixture of the compounds represented by the formulae (1-1) and (1-2) was 0.3% by weight and the amount of N-(2-aminoethyl)-3-aminopropylmethyldimethoxysilane was 0.1% by weight. The obtained resin composition was sufficiently mixed and formed into an interlayer film for a laminated glass (500 µm in thickness) with use of an extruder.

### (2) Production of laminated glass

The obtained interlayer film for a laminated glass was interposed between two sheets of transparent float glass (300 mm in length × 300 mm in width × 2.5 mm in thickness, clear glass) to provide a stack.
Subsequently, the stack was placed in a rubber bag of a vacuum bonding apparatus (product of HIGHTECH ENG KK) and the rubber bag was evacuated at a vacuum of 70 cmHg at a room temperature for 10 minutes. The deaerated vacuum bag was heated to 100°C and held at that temperature for 10 minutes. The vacuum bag was then cooled by air to 25°C. After that, the pressure was released to atmospheric pressure and the stack was removed from the bag.

### (Examples 2 to 21, Comparative Examples 1 to 10)

Interlayer films for a laminated glass and laminated glasses were produced in the same manner as in Example 1 except that the compositions were changed as shown in Tables 1 to 6.

### (Evaluation)

The laminated glasses obtained in examples and comparative examples were evaluated with regard to the following items.
Tables 1 to 6 show the results.

### (1) Evaluation on transmittance

The visible light transmittance Tv of each of the laminated glasses (300 mm in length × 300 mm in width) was obtained with use of a spectro photometer (product of Hitachi. Ltd., "U-4000") based on JIS R 3106 (1998).
Further, the transmittance of each of the laminated glasses at wavelengths of 350 nm, 360 nm, 370 nm, and 380 nm was measured with use of a spectro photometer (product of Hitachi. Ltd., "U-4000"). In this manner, the average value T of the transmittance (350-380 nm) was obtained.

### (2) Determination of Haze value

Each of the laminated glasses (300 mm in length × 300 mm in width) was cut into a size of 50 mm in length × 50 mm in width. Then, the haze value of the resulting laminated glass (50 mm in length × 50 mm in width) was measured with use of a haze meter (Tokyo Denshoku Co, Ltd., "TC-H3PP type") based on JIS K 6714.

### (3) Light resistance test

A color film (a polyethylene terephthalate film containing 0.013% by weight of 2,4-dihydro-5-methyl-4-(phenylazo)-2-phenyl-3H-pyrazol-3-one) having a thickness of 0.5 mm was interposed between two sheets of the obtained interlayer film to provide a stack. The stack was interposed between two sheets of transparent float glass (300 mm in length × 300 mm in width × 2.5 mm in thickness, clear glass).
Subsequently, the stack was placed in a rubber bag of a vacuum bonding apparatus (product of HIGHTECH ENG KK) and the rubber bag was evacuated at a vacuum of 70 cmHg at a room temperature for 10 minutes. The deaerated vacuum bag was heated to 100°C and held at that temperature for 10 minutes. The vacuum bag was then cooled by air to 25°C. After that, the pressure was released to atmospheric pressure and the resulting laminated glass was removed from the bag.

The resulting laminated glass was irradiated with ultraviolet rays for 2000 hours with use of an ultraviolet irradiation apparatus based on JIS R 3205 (1998). The color change before and after the irradiation was evaluated by color difference ΔE.

**[Table 1]**

| | | | Example 1 | Example 2 | Example 3 | Example 4 | Example 5 |
|---|---|---|---|---|---|---|---|
| Thermoplastic elastomer | | | Ethylene-vinl acetate copolymer (vinyl acetate content 28% by mass) | Ethylene-vinyl acetate copolymer (Vinyl acetate content 28% by mass) | Ethylene-vinyl acetate copolymer (Vinyl acetate content 28% by mass) | Ethytene-vinyl acetate copolymer (Vinyl acetate content 28% by mass) | Ethytene-vinyl acetate copolymer (Vinyl acetate content 28% by mass) |
| Amount (% by weight) | Ultraviolet absorber | Mixture of (1-1) and (1-2) | 0.3 | 0.5 | 1.2 | 2.4 | 3.0 |
| | | Compound of (2-1) | - | - | - | - | - |
| | | Compound having benzotriazole structure (SHIPRO KASB KAISHA, LTD, Seesorb 703) | - | - | - | - | - |
| | | 2-(5-chloro-2H-berizobiazole-2-yl)-4-methyl-6-tert-butylphenol | - | - | - | - | - |
| | Silane coupling agent | N-(2-aminoethyl)-3-aminopropyl methyldimethoxysilane | 0.1 | 0.1 | 0.1 | 0.1 | 0.1 |
| Evaluation | Visible light transmittance Tv(%) | | 86.3 | 86.4 | 86.0 | 86.2 | 86.5 |
| | T (350-380 nm)(%) | | 9.1 | 7.8 | 2.4 | 0.7 | 0.5 |
| | Haze value (%) | | 2.0 | 2.0 | 2.0 | 2.0 | 2.0 |
| | ΔE | | 1.8 | 1.5 | 1.1 | 0.8 | 0.7 |

**[Table 2]**

| | | | Example 6 | Example 7 | Example 8 | Example 9 | Example 10 |
|---|---|---|---|---|---|---|---|
| Thermoplastic elastomer | | | Ethylene-vinyl acetate copolymer (Vinyl acetate content 33% by mass) | Ethylene-vinyl acetate copolymer (Vinyl acetate content 33% by mass) | Ethylene-vinyl acetate copolymer (Vinyl acetate content 33% by mass) | Ethylene-vinyl acetate copolymer (Vinyl acetate content 33% by mass) | Ethylene-vinyl acetate copolymer (Vinyl acetate content 33% by mass) |
| Amount (% by weight) | Ultraviolet absorber | Mixture of (1-1) and (1-2) | 0.3 | 0.5 | 1,2 | 2,4 | 3.0 |
| | | Compound of (2-1) | - | - | - | - | - |
| | | Compound having benzotriazole structure (SHIPRO KRSEI KAISHA, LTD., Seesorb 703) | - | - | - | - | - |
| | | 2-(5-chloro-2H-benzotriazok-2-yl)-4-methyl-6-tert-butylphenol | - | - | - | - | - |
| | Silane coupling agent | N-(2-aminoethyl)-3-aminopropyl methyldimethoxysilane | 0.1 | 0.1 | 0.1 | 0.1 | 0.1 |
| Evaluation | Visible light transmittance Tv(%) | | 85.6 | 85.5 | 87.7 | 88.2 | 88.3 |
| | T (350-960 nm)(%) | | 6.5 | 6.6 | 1.4 | 0.3 | 0.3 |
| | Haze value (%) | | 1.2 | 1.2 | 1.1 | 0.6 | 0.6 |
| | ΔE | | 1.7 | 1.5 | 1 | 0.9 | 0.7 |

**[Table 3]**

| | | | Example 11 | Example 12 | Example 13 | Example 14 | Example 15 | Example 16 |
|---|---|---|---|---|---|---|---|---|
| Thermoplastic elastomer | | | Ethylene-vinyl acetate copolymer (Vinyl acetate content 28% by mass) | Ethylene-vinyl acetate copolymer (Vinyl acetate content 28% by mass) | Ethylene-vinyl acetate copolymer (Vinyl acetate content 28% by mass) | Ethylene-vinyl acetate copolymer (Vinyl acetate content 28% by mass) | Ethylene-vinyl acetate copolymer (Vinyl acetate content 28% by mass) | Ethylene-vinyl acetate copolymer (Vinyl acetate content 28% by mass) |
| Amount (% by weight) | Ultraviolet absorber | Mixture of (1-1) and (1-2) | - | - | - | - | - | 0.6 |
| | | Compound of (2-1) | 0.3 | 0.5 | 12 | 24 | 3.0 | 0.6 |
| | | Compound having benzotriazole structure (SHIPRO KASEI KAISHA LTD. Seesorb 703) | - | - | - | - | - | - |
| | | 2-(5-chloro-2H-benzotriazole-2-yl)-4-methyl-6-tert-butylphenol | - | - | - | - | - | - |
| | Silane coupling | N-(2-aminoethyl)-3-aminopropyl methyldimethoxysilene | 0.1 | 0.1 | 0.1 | 0.1 | 0.1 | 0.1 |
| Evaluation | Visible light transmittance Tv(%) | | 88.2 | 86.4 | 86.4 | 86.1 | 86.3 | 86.1 |
| | T (350-380 nm)(%) | | 11.4 | 8.8 | 5A | 2.6 | 1.5 | 4.1 |
| | Haze value (%) | | 1.3 | 1.3 | 1.4 | 1.4 | 1.3 | 1.6 |
| | ΔE | | 1.9 | 1.1 | 1.1 | 0.8 | 0.7 | 1.2 |

**[Table 4]**

| | | | Example 17 | Example 18 | Example 19 | Example 20 | Example 21 |
|---|---|---|---|---|---|---|---|
| Thermoplastic elastomer | | | Ethylene-vinyl acetate copolymer (Vinyl acetate content 33% by mass) | Ethylene-vinyl acetate copolymer (Vinyl acetate content 33% by mass) | Ethylene-vinyl acetate copolymer (Vinyl acetate content 33% by mass) | Ethylene-vinyl acetate copolymer (Vinyl acetate content 33% by mass) | Ethylene-vinyl acetate copolymer, (Vinyl acetate content 33% by mass) |
| Amount (% by weight) | Ultraviolet absorber | Mixture of (1-1) and (1-2) | - | - | - | - | - |
| | | Compound of (2-1) | 0.3 | 0.5 | 1.2 | 2.4 | 3.0 |
| | | Compound having benzotriazole structure (SHIPRO KASEI KAISHA LTD., Seesorb 703) | - | - | - | - | - |
| | | 2-(5-chloro-2H-benzotriazole-2-yl)-4-methyl-6-tert-btylphencl | - | - | - | - | - |
| | Silane coupling agent | N-(2-aminoethyl)-3-aminoproyl methyldimethoxysilane | 0.1 | 0.1 | 0.1 | 0.1 | 0.1 |
| Evaluation | Visible light transmittance Tv (%) | | 84.7 | 84.5 | 84.3 | 84.4 | 84.6 |
| | T (350-380 nm) (%) | | 10.5 | 8.3 | 4.8 | 2.3 | 1.8 |
| | Haze value (%) | | 1.3 | 1.2 | 1.3 | 1.3 | 1.3 |
| | ΔE | | 1.6 | 1.4 | 1 | 0.9 | 0.8 |

**[Table 5]**

| | | | Comparative Example 1 | Comparative Example 2 | Comparative Example 3 | Comparative Example 4 | Comparative Examples 5 | Comparative Example 6 |
|---|---|---|---|---|---|---|---|---|
| Thermoplastic elastomer | | | Ethylene-vinyl acetate copolymer (Vinyl acetate content 28% by mass) | - | Ethylene-vinyl acetate copolymer (Vinyl acetate content 28% by mass) | Ethylene-vinyl acotate copolymer (Vinyl acetate content 28% by mass) | - | - |
| | | | - | Ethyleno-vinyl acetata copolymer (Vinyl acetate content 33% by mass) | - | - | Ethylene-vinyl acetate copolymer (Vinyl acetate content 33% by mess) | Ethylene-vinyl acetate copolymer (vinyl acetate content 33% by mass) |
| Amount (% by weight) | Ultraviolet absorber | Mixture of (1-1) and (1-2) | - | - | - | - | - | - |
| | | Compund of (2-1) | - | - | - | - | - | - |
| | | Compound having benzotriazole structure (SHIPRO KASEI KAISHA LTD. Seesorb 703) | - | - | 0.5 | - | 0.5 | - |
| | | 2-(5-chloro-2H-benzotriazole-2-yl)-4-methyl-6-tert-butylphenol | - | - | - | 0.5 | - | 0.5 |
| | Silane coupling agent | N-(2-aminoethyl)-3-aminopropyl methyldimethoxysilane | 0.1 | 0.1 | 0.1 | 0.1 | 0.1 | 0.1 |
| Evaluation | Visible light transmittance Tv(%) | | 86.5 | 84.3 | 86.0 | 85.3 | 84.1 | 83.8 |
| | T (350-380 nm)(%) | | 75.6 | 74.4 | 8.1 | 6.6 | 7.2 | 5.9 |
| | Haze value (%) | | 20 | 1.4 | 3.3 | 3.1 | 2.2 | 2.2 |
| | ΔE | | 2.7 | 2.5 | 2.1 | 2.1 | 2.2 | 2.1 |

**[Table 6]**

| | | | Comparative Example 7 | Comparative Example 8 | Comparative Example 9 | Comparative Examples 10 |
|---|---|---|---|---|---|---|
| Thermoplastic elastomer | | | Ethylent-vinyl acetate copolymer (Vinyl acetate content 28% by mass) | - | Ethylene-vinyl acetate copolymer (Vinyl acetate content 28% by mass) | - |
| | | | - | Ethylene-vinyl acetate copolymer (Vinyl acetate content 33% by mass) | - | Ethylene-vinyl acetate copolymer (Vinyl acetate content 33% by mass) |
| Amount (% by weight) | Ultraviolet absorber | Mixture or (1-1) and (1-2) | - | - | - | - |
| | | Compound of (2-1) | - | - | - | - |
| | | Compound having benzotriazole structure (BASF, TINUVIN328) | 0.5 | 0.5 | - | - |
| | | 2,4-dihydroxybenzophenone | - | - | 0.5 | 0.5 |
| | Silane coupling agent | N-(2-aminoethyl)-3-aminopropyl methyldimethoxysilane | 0.1 | 0.1 | 0.1 | 0.1 |
| Evacuation | Visible light transmittance Tv (%) | | 85.7 | 85.4 | 84.4 | 84.1 |
| | T (35D-380 nm)(%) | | 11.2 | 9.3 | 10.6 | 8.8 |
| | Haze value (%) | | 3.5 | 2.5 | 3.0 | 22 |
| | ΔE | | 2.2 | 3.1 | 2.4 | 2.2 |

### INDUSTRIAL APPLICABILITY

According to the present invention, it is possible to provide an interlayer film for a laminated glass containing a thermoplastic elastomer and preventing degradation of interior materials of buildings, art works, constituent materials of a laminated glass other than the interlayer film for a laminated glass, and the like, while maintaining high transparency. Moreover, according to the present invention, it is possible to provide an interlayer film for a laminated glass containing a thermoplastic elastomer that contains no plasticizer and preventing degradation of interior materials of buildings, art works, constituent materials of a laminated glass other than the interlayer film for a laminated glass, and the like, while maintaining high transparency.

## Claims

1. An interlayer film for a laminated glass, which comprises:
a thermoplastic elastomer; and
any of a compound represented by a formula (1), a compound represented by a formula (2), and a mixture of the compound represented by the formula (1) and the compound represented by the formula (2): 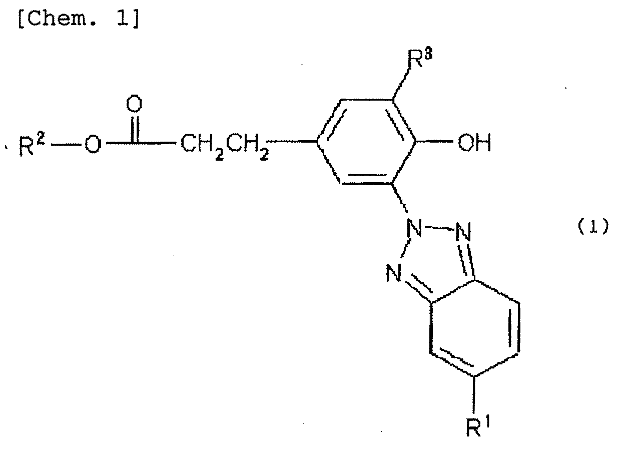 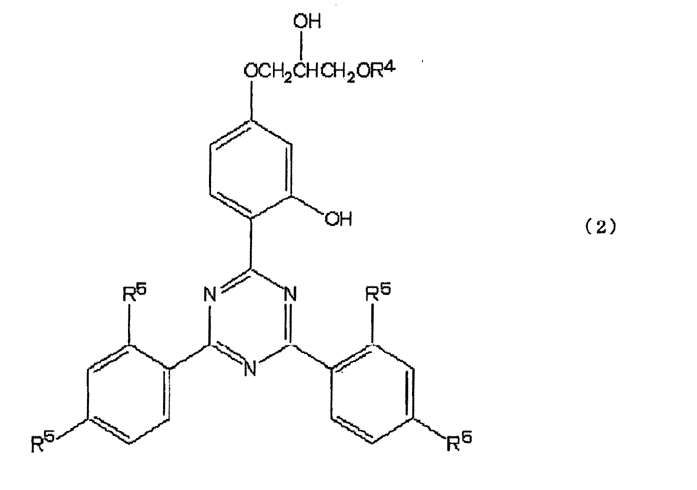
wherein, R¹ represents hydrogen or chlorine, R² represents an alkyl group having a straight-chain or branched structure containing 3 to 10 carbon atoms, and R³ represents an alkyl group containing 3 to 10 carbon atoms, in the formula (1) and
R⁴ represents an alkyl group containing 1 to 5 carbon atoms and R⁵ represents a hydrogen atom or an alkyl group containing 1 to 3 carbon atoms, in the formula (2).

2. The interlayer film for a laminated glass according to claim 1,
wherein the amount of the compound represented by the formula (1) or the compound represented by the formula (2) is 0.1 to 5% by weight.

3. The interlayer film for a laminated glass according to claim 1,
wherein the amount of the compound represented by the formula (1) or the compound represented by the formula (2) is 0.3 to 3% by weight.

4. The interlayer film for a laminated glass according to claim 1,
wherein R¹ represents chlorine, R² represents an alkyl group having a straight-chain or branched structure containing 4 to 9 carbon atoms, and R³ represents an alkyl group having a branched structure containing 4 to 6 carbon atoms, in the formula (1).

5. The interlayer film for a laminated glass according to claim 1,
wherein the compound represented by the formula (1) is a mixture of a compound containing an alkyl group having a straight-chain structure as R² and a compound containing an alkyl group having a branched structure as R².

6. The interlayer film for a laminated glass according to claim 1 or 2,
wherein the thermoplastic elastomer is an ethylene-vinyl acetate copolymer.

7. The interlayer film for a laminated glass according to claim 6,
wherein the ethylene-vinyl acetate copolymer has a vinyl acetate content of 20 to 40% by mass measured based on JIS K-6730 "Testing Methods for Ethylene-Vinyl Acetate Resins".

8. The interlayer film for a laminated glass according to claim 6,
wherein the ethylene-vinyl acetate copolymer has a vinyl acetate content of 29 to 40% by mass measured based on JIS K-6730 "Testing Methods for Ethylene-Vinyl Acetate Resins".

9. A laminated glass comprising
an interlayer film for a laminated glass according to claim 1 or 2 interposed between two transparent plates.
